# FASCICULE DE BREVET EUROPEEN

(11) **EP 2 122 895 B1**
(45) Date de publication et mention de la délivrance du brevet: **04.10.2017**
(21) Numéro de dépôt: 07858011.5
(22) Date de dépôt: 20.12.2007
(51) Int. Cl.: H04L 1/18

(54) **PROCEDE DE RETRANSMISSION A REDONDANCE INCREMENTALE POUR DES PAQUETS FRAGMENTES**
WEITERÜBERTRAGUNGSVERFAHREN MIT INKREMENTELLER REDUNDANZ FÜR FRAGMENTIERTE PAKETE
INCREMENTAL REDUNDANCY RETRANSMISSION METHOD FOR FRAGMENTED PACKETS

(30) Priorité: 22.12.2006 FR 0611256
(43) Date de publication de la demande: 25.11.2009
(73) Titulaire: Thales, 92400 Courbevoie (FR)
(72) Inventeur: LE MARTRET, Christophe, 92300 Levallois Perret (FR); LE DUC, Aude, 75013 Paris (FR)
(74) Mandataire: Dudouit, Isabelle
(86) Numéro de dépôt international: PCT/EP2007/064392
(87) Numéro de publication internationale: WO 2008/077909

(56) Documents cités:
- EP-A- 1 677 449
- WO-A-00/60799
- WO-A-02/058314
- WHA SOOK JEON ET AL: "PACKET SCHEDULER FOR MOBILE INTERNET SERVICES USING HIGH SPEED DOWNLINK PACKET ACCESS" IEEE TRANSACTIONS ON WIRELESS COMMUNICATIONS, IEEE SERVICE CENTER, PISCATAWAY, NJ, US, vol. 3, no. 5, septembre 2004 (2004-09), pages 1789-1801, XP001227374 ISSN: 1536-1276
- YOUNGKYU CHOI ET AL: "MSDU-based ARQ scheme for IP-level performance maximization" GLOBAL TELECOMMUNICATIONS CONFERENCE, 2005. GLOBECOM '05. IEEE ST. LOIUS, MO, USA 28 NOV.-2 DEC. 2005, PISCATAWAY, NJ, USA,IEEE, 28 novembre 2005 (2005-11-28), pages 2495-2499, XP010879404 ISBN: 0-7803-9414-3 cité dans la demande
- DAMNJANOVIC A D ET AL: "Forward high-speed wireless packet data service in is-2000 - 1xev-dv" IEEE COMMUNICATIONS MAGAZINE, IEEE SERVICE CENTER, PISCATAWAY, US, vol. 41, no. 8, 1 août 2003 (2003-08-01), pages 170-177, XP011099983 ISSN: 0163-6804
- LG ELECTRONICS: "Forward Packet Data Control Assignment Channel" 3RD GENERATION PARTNERSHIP PROJECT 2 3GPP2, XX, XX, no. C30-20060731-029, 31 juillet 2006 (2006-07-31), pages 1-15, XP002466303

## Description

L'invention concerne, notamment, un procédé de retransmission incrémentale adapté aux transmissions de paquets fragmentés ou encore aux transmissions de données pouvant être fragmentées.

Elle s'applique, par exemple, dans des réseaux de télécommunications, et plus précisément, celui des réseaux sans fil.

Elle est utilisée pour transmettre les SDU ou Services rendus par une couche du modèle OSI à une couche adjacente, (en anglo-saxon Service Data Unit) dans un réseau utilisant, par exemple, le protocole IP.

La fragmentation est définie dans le contexte de la présente invention comme permettant une adaptation de la taille de paquets entre la couche d'accès au milieu ou MAC et la couche supérieure.

A débit de données constant, toutes les méthodes d'accès radio n'ont pas les mêmes performances (délai, gigue, taux d'erreur paquet, etc.) en sortie de la couche d'accès au support habituellement désignée par les initiales MAC (en anglo-saxon abrégé de Medium Access Control), et après le réassemblage des unités de protocole de réseau ou PDU (abréviation anglaise de Protocol Data Unit), correspondant à l'ensemble des informations échangées entre niveaux dans le système des couches modèles OSI, au niveau de la couche IP (Internet Protocol) ou de tout autre protocole dans lequel les paquets de données à transmettre peuvent être fragmentés.

Le document intitulé « MSDU-Based ARQ Scheme for IP-Level Performance Maximization », de Youngkyu Choi et al publié dans le livre IEEE Globecom 2005 proceedings, divulgue une solution incluant la couche d'accès radio et la couche IP, afin d'optimiser les performances au niveau IP. Dans ce document, l'idée est d'utiliser au niveau de la couche d'accès radio, le fait que les paquets MAC à transmettre appartiennent à un même paquet IP. Se basant sur une couche d'accès radio ARQ conventionnelle, système de retransmission sur détection d'erreurs (en anglais Automatic Repeat Request), l'idée est de transférer la persistance de l'ARQ pour chacun des paquets MAC (stratégie MPDU Mac Protocol Data Unit) en un crédit global de retransmission pour l'ensemble des paquets MAC constituant le paquet IP (stratégie MSDU pour Mac Service Data Unit, unité de données de service MAC). Le gain en performances au niveau IP entre les deux approches est très significatif.

De manière plus générale, l'art antérieur permet d'améliorer les performances au niveau IP, en prenant en compte au niveau MAC, le fait que ces paquets MAC proviennent d'un même paquet IP. Cette stratégie s'applique à un contexte plus général que celui du protocole internet, lorsque les paquets MAC transmis proviennent d'une fragmentation d'un paquet plus grand.

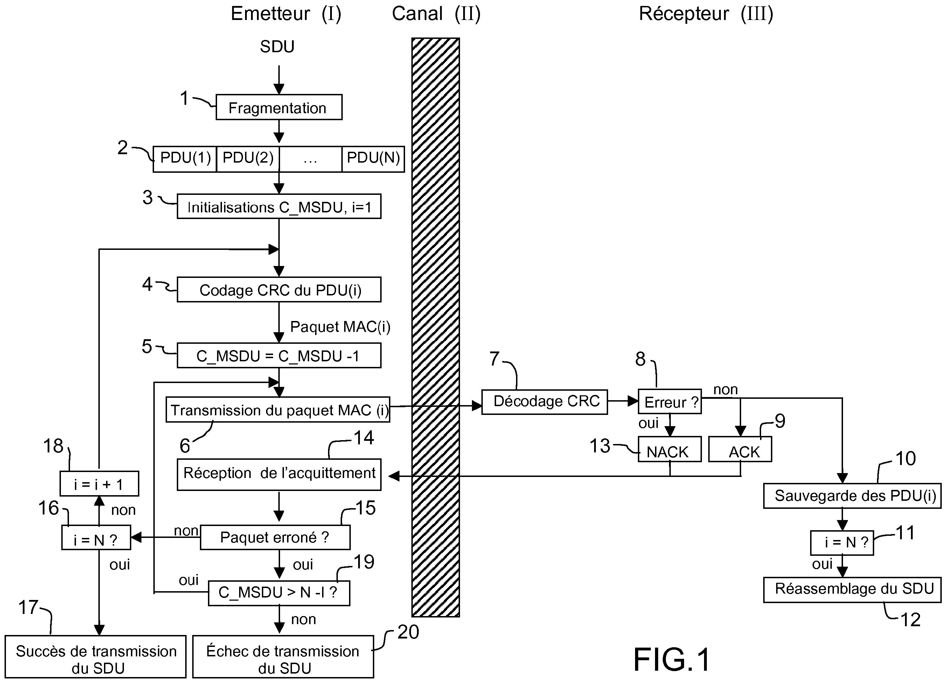

La figure 1 schématise un exemple d'implémentation d'un procédé selon l'art antérieur. La partie I correspond à un émetteur, la partie II au canal de transmission, la partie III au récepteur.

Le procédé selon l'art antérieur exécute les étapes suivantes :
Au niveau de l'émetteur, un paquet SDU est fragmenté, 1, en plusieurs paquets PDU(i), 2. Le procédé initialise ensuite un compteur C_MSDU correspondant à un crédit global de retransmission et initialise i=1, 3, puis code le PDU(i) concerné avec un CRC, 4. Il décrémente ensuite le compteur C_MSDU d'une unité, 5, puis le PDU(i) est transmis, 6, à travers le canal de transmission II, pour être reçu au niveau de la partie récepteur III. Le récepteur 7 décode le CRC, et vérifie s'il y a une erreur de transmission, 8. Dans le cas où il n'y a pas d'erreur, le récepteur retourne l'accusé de réception ACK, acquittement correct de la transmission, 9, à l'émetteur, et sauvegarde les PDU(i) correspondant au SDU transmis, 10, il teste ensuite 11, si tous les PDU ont été transmis, et si oui il les réassemble, 12, pour obtenir le SDU, sinon il attend les autres paquets.

Dans le cas où le récepteur détecte une erreur, il retourne l'accusé NACK, 13, vers le récepteur.

Les accusés de réception ACK ou NACK sont renvoyés vers l'émetteur, réception de l'acquittement 14. L'émetteur vérifie si le paquet est erroné, 15. Si le paquet est valable, il teste 16, si tous les PDU ont été transmis, si oui, l'émetteur valide la transmission du SDU, 17. Dans le cas où tous les PDU n'ont pas été transmis, alors on passe au PDU suivant, 18, et on retourne à l'étape de codage 4.

Dans le cas où le paquet est erroné, alors on teste si le compteur C_MSDU est supérieur au nombre N de PDU constituant le paquet moins le nombre de PDU déjà transmis, 19. Dans le cas où la valeur de ce compteur est supérieure, ce qui correspond au fait qu'il existe encore du crédit pour transmettre les paquets, le procédé réitère les étapes à partir de l'étape de transmission du PDU(i), 6.

Dans le cas contraire, le crédit autorisé est épuisé, alors l'émetteur décrète un échec de transmission du SDU, 20.

Le brevet EP-A-1677449 décrit l'algorithme MSDU implémenté sur une couche MAC de type ARQ conventionnel.

L'idée de la présente invention consiste, notamment, à utiliser une technique de retransmission, par exemple, avec redondance incrémentale au niveau de la couche MAC à la place de la technique classique ARQ (Automatic Repeat Request).

L'idée de l'invention consiste, notamment, à mettre en oeuvre la redondance incrémentale au niveau de la couche d'accès au milieu ou MAC, puis à mettre en oeuvre, de manière associée, une gestion du nombre de retransmissions qui peut dépendre soit du nombre de fragments transmis (les fragments étant les paquets MAC obtenus après codage du PDU), soit du nombre de PDU transmis.

L'invention concerne un procédé de retransmission à redondance incrémentale, adapté aux transmissions de paquets pouvant être fragmentés en N paquets indicés i mis en oeuvre dans un système de transmission comprenant au moins un émetteur et un récepteur caractérisé en ce qu'il comporte en combinaison au moins les étapes suivantes :
1 - recevoir au niveau de la couche MAC( Médium Access Control) un paquet SDU, IP provenant d'une couche supérieure,
2 - diviser cedit paquet SDU en N paquets MAC notés PDU (i) (unités de contrôle ou en anglo-saxon « Protocol Data Unit »),
3 - initialiser le compteur C_MSDU correspondant au crédit global de retransmission à N*M, où M est le nombre de transmission/retransmissions autorisées pour chaque PDU,
4 - initialiser i à une valeur donnée, i correspondant à l'indice du PDU qui va être transmis,
5 - coder 33, 63 un paquet PDU(i) avec un codeur convolutif de rendement 1/K, K paquets MAC sont obtenus, chacun des K paquets MAC est noté P.MAC(i)(k) avec k variant de 1 à K, un paquet P.MAC(i)(k) contenant le PDU et (K-1) paquets contenant la redondance, ,
6 - poser k=1 et transmettre le PDU n° i obtenu après codage (soit P.MAC(i)(1)),
7 - au niveau de l'émetteur, décrémenter le compteur de crédit de retransmission, C_MSDU de une unité, et transmettre un paquet MAC.P.MAC(1) vers le récepteur,
8 - au niveau du récepteur, transmettre un accusé réception ACK à l'émetteur et vérifier la valeur de i, s'il n'y a pas d'erreur :
   - si i=N, alors tous les PDU ont été transmis avec succès, on réassemble le SDU,
   - si i<N et si C_MSDU est supérieur au nombre de PDU qui n'ont pas encore été transmis au moins une fois, incrémenter i d'une unité et revenir à l'étape 5,
   - si i<N et C_MSDU est inférieur au nombre de PDU qui n'ont pas encore été transmis, alors décréter l'échec de la transmission du SDU.
9 - s'il y a des erreurs, envoyer un NACK à l'émetteur et vérifier la valeur de C_MSDU :
   - si C_MSDU est inférieur au nombre de PDU qui n'ont pas encore été transmis alors décréter l'échec de la transmission du SDU,
   - si C_MSDU est supérieur au nombre de PDU qui n'ont pas encore été transmis et que les (K-1) blocs de redondance associés au PDU n°i n'ont pas été transmis, alors incrémenter k d'une unité et transmettre le paquet MAC noté P.MAC(i)(k) et revenir à l'étape 8,
   - si C_MSDU est supérieur au nombre de PDU qui n'ont pas encore été transmis et que tous les blocs, information et redondance compris, obtenus après codage du PDU n° i ont été transmis, alors revenir à l'étape 6 sans modifier la valeur de i.

Le procédé selon l'invention présente notamment les avantages suivants :
- L'utilisation de la retransmission avec redondance incrémentale au niveau de la couche MAC permet d'obtenir une adaptation de lien automatique, correspondant à un code correcteur à capacité de correction variable, s'adaptant automatiquement à l'état du canal de transmission,
- Il permet de diminuer le taux d'erreur paquet, le délai et la gigue au niveau IP, ou au niveau du protocole utilisé.

D'autres caractéristiques et avantages de la présente invention apparaîtront mieux à la lecture de la description qui suit d'un exemple de réalisation donné à titre illustratif et nullement limitatif, annexé des figures qui représentent :
- La figure 1 un exemple d'implémentation pour un procédé selon l'art antérieur,
- La figure 2 un exemple de dispositif pour la mise en oeuvre du procédé selon l'invention,
- La figure 3 un exemple d'application dans laquelle le procédé selon l'invention peut être implémenté,
- La figure 4 un schéma d'implémentation du procédé selon l'invention, et
- La figure 5 un schéma d'une variante de réalisation sans redondance incrémentale.

Afin de mieux faire comprendre l'objet de la présente invention, la description qui suit est donnée à titre illustratif et non limitatif dans le cadre d'un réseau fonctionnant avec le protocole Internet.

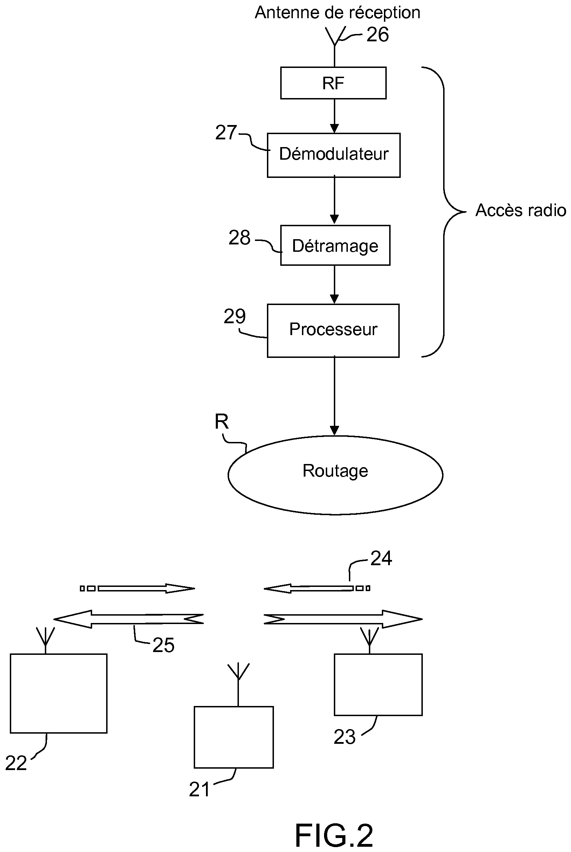

La figure 2 représente un exemple de schéma de système centralisé permettant la mise en oeuvre du procédé selon l'invention. Le schéma comporte une station de base, jouant le rôle d'émetteur, 21, un premier récepteur 22, et un deuxième récepteur 23 correspondant respectivement à un premier et un deuxième utilisateur. Les utilisateurs sont des abonnés mobiles ou pas.

La liaison descendante, c'est-à-dire, le sens dans lequel sont transférées les données utiles, de la station de base vers les abonnés est représentée par la flèche 24.

Le procédé selon l'invention s'applique aussi dans le cas d'une liaison montante, les données étant transférées des abonnés vers une station centrale, la liaison étant représentée par la flèche 25. Dans ce cas d'application, les utilisateurs jouent alors le rôle d'émetteur et la station de base le rôle de récepteur.

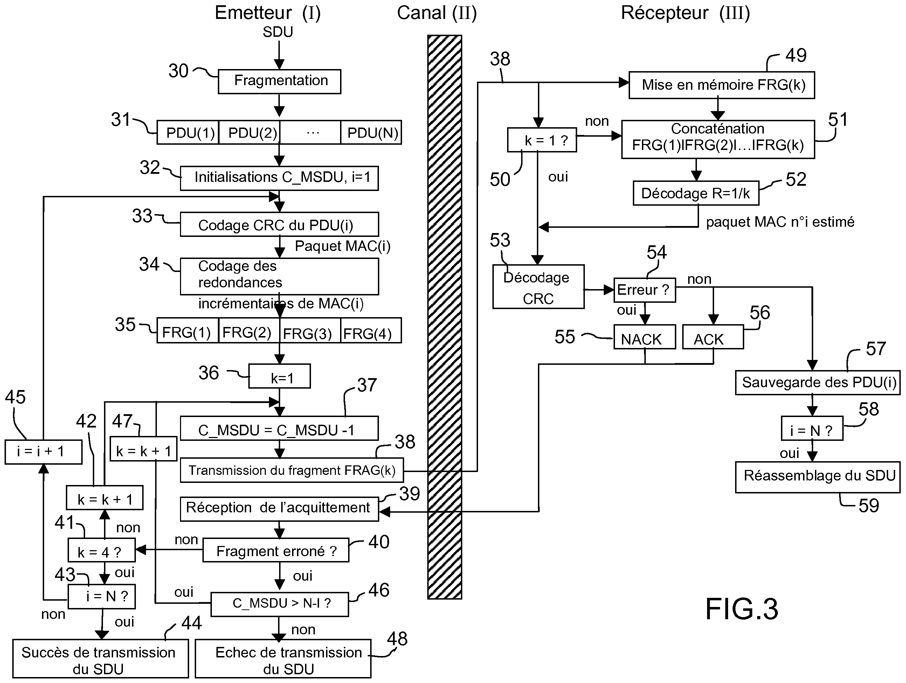

Un émetteur et un récepteur faisant partie du système de transmission sont équipés de moyens de communication permettant aux différents éléments émetteurs, récepteurs formant et d'un module de type processeur permettant l'exécution des étapes du procédé décrites ci-après en relation avec la figure 3.

Au niveau de l'émetteur, un paquet MAC est mis sous la forme d'une trame, puis passe dans un modulateur avant d'être transmis à un émetteur comprenant une antenne d'émission. Au niveau de la réception, le signal S reçu au niveau de l'antenne de réception 26 passe dans un démodulateur 27, puis un dispositif 28, permettant de retrouver la trame initiale (détramage). Le paquet est ensuite transmis à un processeur 29 qui va exécuter les étapes du procédé et générer des paquets non-fragmentés au dispositif de routage R.

Il est bien entendu que, sans sortir du cadre de l'invention, ce schéma donné à titre non limitatif peut comporter un nombre d'utilisateurs supérieur à deux.

La figure 3 schématise un exemple d'implémentation du procédé selon l'invention. Elle comporte une partie émetteur I, une partie canal de transmission II, une partie récepteur III.

Le procédé selon l'invention comporte, par exemple, les étapes décrites ci-après :
La génération de manière aléatoire d'un paquet IP (SDU) (étape 1)

### Au niveau de l'émetteur

L'émetteur va, dans un premier temps, diviser le SDU (Service Data unit), 30 en N paquets MAC PDU(1), PDU(2)....PDU(N), 31, étape 2. Il initialise, étape 3, 32, un compteur C_MSDU correspondant à un crédit global de retransmission à N*M, où M est le nombre de transmission/retransmissions autorisées pour chaque PDU. Il initialise le compteur i qui correspond à l'indice du paquet considéré, par exemple à une valeur égale à 1, étape 4. Lors de l'étape 5 référencée 33 sur la figure, l'émetteur code le PDU(i) en cours de traitement avec un codeur convolutif de rendement 1/K. En sortie du codeur il existe donc K paquets MAC : un paquet MAC contenant l'information, autrement dit le PDU et les (K-1) paquets contenant la redondance. Chacun des ces K paquets MAC est noté P.MAC(i)(k) avec P.MAC = Paquet MAC, avec k variant de 1 à K. Pour un paquet MAC, K paquets MAC P.MAC(i)(k) sont ainsi obtenus, numérotés de 1 à K, 35 (la figure 3 représente le cas où K est égal à 4). Le paquet MAC P.MAC(i)(1) est identique au PDU. Ceci correspond au principe du codage à rendement compatible. L'indice du paquet MAC P.MAC(i)(k) est initialisé, étape 36, à k=1 étape 6.

Au cours de l'étape 7 référencée 37 sur la figure, l'émetteur décrémente le compteur de crédit de retransmission d'une unité. Il transmet ensuite, 38, le paquet MAC P.MAC(i)(1) vers le récepteur.

L'émetteur reçoit, 39, l'acquittement du paquet transmis, venant du récepteur. L'émetteur teste, 40, si le paquet MAC P.MAC(i)(1) est erroné ou non.

Etape 8 ; s'il n'y a pas d'erreur dans la transmission, ACK reçu du récepteur vers l'émetteur, alors le procédé vérifie la valeur de i:
a. si i=N, alors tous les PDU ont été transmis avec succès, réassemble le SDU,
b. si i<N et si C_MSDU est supérieur au nombre de PDU qui n'ont pas encore été transmis, incrémenter i d'une unité et revenir à l'étape 5,
c. si i<N et C_MSDU est inférieur au nombre de PDU qui n'ont pas encore été transmis, alors décréter l'échec de la transmission du SDU.

Etape 9 : s'il y a des erreurs, envoyer un NACK à l'émetteur et vérifier la valeur de C_MSDU :
- si C_MSDU est inférieur au nombre de PDU qui n'ont pas encore été transmis alors décréter l'échec de la transmission du SDU,
- si C_MSDU est supérieur au nombre de PDU qui n'ont pas encore été transmis et que les (K-1) blocs de redondance associés au PDU n°i n'ont pas tous été transmis, alors incrémenter k d'une unité et transmettre le paquet MAC noté P.MAC(i)(k) et revenir à l'étape 8
- si C_MSDU est supérieur au nombre de PDU qui n'ont pas encore été transmis et que tous les blocs, information et redondance compris, obtenus après codage du PDU n°i ont été transmis, alors revenir à l'étape 6 sans modifier la valeur de i.

Au niveau de l'émetteur, le procédé exécute les étapes suivantes : S'il y a des erreurs, tester, 41, si le nombre total de PDU a été transmis, i=N ?
▪ Si oui, 44, l'émetteur décrète le succès de transmission du SDU,
▪ Si non, 45, considérer le paquet MAC suivant, i=i+1,
S'il y a des erreurs dans la transmission, NACK reçu,
▪ Si le nombre de PDU restant à transmettre est inférieur à la valeur du compteur C_MSDU, 46, tester la valeur de k :
   ∘ Si k=K, décrémenter le compteur C_MSDU, 37, poser k=1 et transmettre le fragment P.MAC(i)(1), 47,38
   ∘ Si k<K, incrémenter k d'une unité et transmettre le fragment P.MAC(i)(k), 47, 38
▪ Sinon arrêter la transmission du SDU, échec de transmission du SDU, 48.

### Au niveau du récepteur

Le récepteur reçoit un fragment transmis, 38, et le met en mémoire 49, et simultanément teste si k=1, 50,
▪ Si k est différent de 1, il effectue la concaténation 51 des paquets MAC P.MAC(i)(k) reçus de 1 à k, en utilisant les éléments mémorisés, il décode avec le codage de rendement R=1/k et il va à l'étape de décodage 52,
▪ Si k est égal à 1, alors le récepteur décode le CRC du paquet MAC reçu, 53,

Après décodage, le récepteur teste s'il y a une erreur dans la transmission du fragment, 54,
▪ S'il y a une erreur il transmet le message NACK, 55, à l'émetteur,
▪ S'il n'y a pas d'erreur il transmet le message ACK, 56, à l'émetteur et simultanément réalise une sauvegarde des PDU(i), 57, puis teste si i est égal au nombre N de PDU, 58,
   ∘ Si oui, il réassemble le SDU, 59,
   ∘ Si non, il attend les autres paquets.

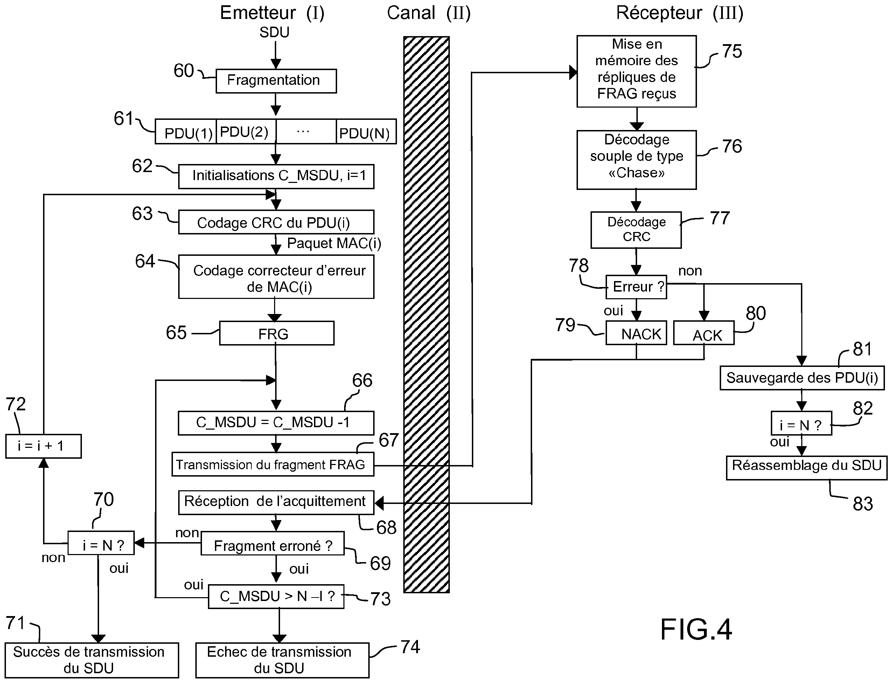

La figure 4 représente une variante de réalisation pour laquelle, on code une fois le paquet MAC avec un code correcteur d'erreur en un paquet FRG (fragment) que l'on retransmet autant de fois qu'il est nécessaire. Le nombre est fixé, par exemple, en fonction du compteur correspondant à un crédit global de retransmission.

A la réception, le procédé collectionne les versions réémises de fragment FRG qu'il décode sous forme de décodage souple de type « chase decoding » connu de l'Homme du métier.

Le procédé exécute, par exemple, les étapes suivantes :

### Au niveau de l'émetteur

L'émetteur va, dans un premier temps, fragmenter le SDU (Service Data unit), 60 en N paquets PDU(1), PDU(2)....PDU(N), 61. Il initialise, 62, un compteur correspondant à un crédit global de retransmission C_MSDU et le compteur i du numéro de paquet à traiter à 1. Lors de l'étape 63, l'émetteur code le PDU(i) en cours de traitement avec un CRC, conduisant à un paquet MAC(i) puis, 64, il code le paquet MAC avec un code correcteur d'erreur connu de l'Homme du métier en un paquet FRG, 65, qui est retransmis autant de fois qu'il est nécessaire. Au cours de l'étape 66, l'émetteur décrémente le compteur de crédit de retransmission d'une unité.

Il transmet ensuite, 67, le fragment FRG vers le récepteur.

L'émetteur reçoit 68 l'acquittement du paquet transmis, venant du récepteur. L'émetteur teste, 69, si le fragment est erroné ou non.

S'il n'y a pas d'erreur dans la transmission, (ACK reçu du récepteur vers l'émetteur), alors
tester si le nombre total de paquets i=N ? a été transmis, 70,
▪ Si oui, 71, l'émetteur décrète le succès de transmission du SDU,
▪ Si non, 72, considérer le paquet MAC suivant, i=i+1, et retourner à l'étape de codage CRC, 63,
S'il y a des erreurs dans la transmission, NACK reçu,
Si le nombre de fragments restant à transmettre est inférieur à la valeur du compteur C_MSDU, 73, on décrémente le compteur C_MSDU, 66, et on réitère la transmission du fragment FRG dans la limite du compteur C_MSDU,
Sinon arrêter la transmission du SDU, échec de transmission du SDU, 74.

### Au niveau du récepteur

Le récepteur reçoit un fragment transmis, et le met en mémoire 75,
Il décode le fragment FRG en utilisant un décodage souple, 76, puis décode le CRC, 77,
Il teste ensuite, 78, s'il y a une erreur,
En cas d'erreur 79, il transmet le message NACK à l'émetteur (69),
Sinon, 80, il transmet le message ACK à l'émetteur, et simultanément sauvegarde les PDU(i) 81, vérifie si i est égal au nombre N de PDU, 82
   ∘ Si oui, il réassemble le SDU, 83
   ∘ Si non, il attend les autres paquets.

Les étapes du procédé décrites ci-dessus, peuvent être mises en oeuvre dans tout réseau point-à-point, point-à-multipoint ou tout autre système d'accès radio multimédia.

Les fragments K peuvent avoir la même taille, ou des tailles différentes.

## Revendications

1. Procédé de retransmission à redondance incrémentale adapté aux transmissions de paquets pouvant être fragmentés en N paquets indicés i mis en oeuvre dans un système de transmission comprenant au moins un émetteur (21) et un récepteur (22) **caractérisé en ce qu'**il comporte en combinaison au moins les étapes suivantes :
Au niveau dudit émetteur
1. recevoir un paquet SDU, IP au niveau d'une couche MAC (Medium Access Control), ledit paquet provenant d'une couche supérieure SDU (services Data Unit),
2. diviser (31, 60) cedit SDU en N paquets MAC notés PDU(i) (unités de protocole réseau ou Protocol Data Unit),
3. initialiser (32, 62) le compteur C_MSDU correspondant au crédit global de retransmission à N*M, où M est le nombre de transmission/retransmissions autorisées pour chaque PDU,
4. initialiser i à une valeur donnée avec i = 1, i correspondant à l'indice du PDU qui va être transmis,
5. coder (33, 63) un paquet PDU(i) avec un codeur convolutif de rendement 1/K, K paquets MAC sont obtenus, chacun des K paquets MAC est noté P.MAC(i)(k) avec k variant de 1 à K, un paquet P.MAC(i)(k) contenant le PDU et (K-1) paquets contenant la redondance, c
6. poser k=1 (36) et transmettre le PDU- n° i obtenu après codage (soit P.MAC(i)(1)),
7. au niveau de l'émetteur, décrémenter (37, 66) le compteur de crédit de retransmission, C_MSDU de une unité, et transmettre (38) un paquet MAC.P.MAC(1) vers le récepteur,
8. au niveau du récepteur transmettre un accusé réception ACK à l'émetteur (39) et vérifier la valeur de i, s'il n'y a pas d'erreur :
si i=N, alors tous les PDU ont été transmis avec succès, réassemble le SDU,
si i<N et si C_MSDU est supérieur au nombre de PDU qui n'ont pas encore été transmis au moins une fois, incrémenter i d'une unité et revenir à l'étape 5, de division du SDU en N paquets MAC)
si i<N et C_MSDU est inférieur au nombre de PDU qui n'ont pas encore été transmis, alors décréter l'échec de la transmission du SDU.
9. s'il y a des erreurs, envoyer un NACK à l'émetteur et vérifier la valeur de C_MSDU :
• si C_MSDU est inférieur au nombre de PDU qui n'ont pas encore été transmis alors décréter l'échec de la transmission du SDU,
• si C_MSDU est supérieur au nombre de PDU qui n'ont pas encore été transmis et que les (K-1) blocs de redondance associés au PDU n° i n'ont pas été transmis, alors incrémenter k d'une unité et transmettre le paquet MAC noté P.MAC(i)(k) et revenir à l'étape 8,
si C_MSDU est supérieur au nombre de PDU qui n'ont pas encore été transmis et que tous les blocs, information et redondance compris, obtenus après codage du PDU n° i ont été transmis, alors revenir à l'étape 6 sans modifier la valeur de i.

2. Procédé selon la revendication 1, **caractérisé en ce qu'**il comporte au niveau de la réception, au moins les étapes suivantes :
mémoriser (49) un fragment reçu et simultanément tester (50) si l'indice du fragment, noté k, correspond au premier fragment du paquet transmis,
▪ Si k est différent de 1, concaténer (51) les fragments reçus de 1 à k, en utilisant les éléments mémorisés,
∘ décoder avec le codage de rendement utilisé à l'émission et aller à une étape de décodage 52,
▪ Si k est égal à 1, décoder (53) le CRC du paquet MAC P.MAC(i)(k) reçu,
Après décodage, tester s'il y a une erreur dans la transmission du fragment, 54,
▪ S'il y a une erreur, transmettre le message NACK, (55), à l'émetteur,
▪ S'il n'y a pas d'erreur, transmettre le message ACK, (56), à l'émetteur et simultanément réaliser une sauvegarde des PDU(i), (57), puis tester si i est égal au nombre N de PDU, (58),
∘ Si oui, réassembler le SDU, (59).

3. Procédé selon la revendication 1, **caractérisé en ce que** dans le cas où un paquet MAC issu de l'étape 2 est codé une fois avec un code d'erreur en un fragment FRG (65), ledit procédé comporte au moins les étapes suivantes :
Au niveau de l'émetteur :
• coder (63) le PDU(i) en cours de traitement avec un CRC conduisant à un paquet MAC(i), puis (64) coder le paquet MAC(i) avec un code correcteur d'erreur en un fragment FRG (65),
• décrémenter (66) le compteur de crédit de retransmission, C_MSDU de une unité et transmettre le fragment FRG (65) vers le récepteur,
• (68) l'émetteur reçoit l'acquittement du paquet transmis venant du récepteur
• dans le cas où il n'y a pas d'erreur dans la transmission du paquet MAC P.MAC(i)(k), (ACK reçu du récepteur vers l'émetteur), on exécute les étapes suivantes :
- tester si i= N, (70)
Si oui, (71) décréter le succès de la transmission.
• Si non (72), considérer le paquet MAC suivant, i=i+1 et retourner à l'étape de codage (63),
S'il y a eu des erreurs dans la transmission, le NACK a été reçu,
Si le nombre de fragments restant à transmettre est inférieur à la valeur du compteur C_MSDU, (73), on décrémente le compteur C_MSDU, (66), et on réitère la transmission du fragment FRG dans la limite du compteur C_MSDU,
Sinon arrêter la transmission du SDU, et décreter l'échec de transmission du SDU, (74).

4. Procédé selon la revendication 3, **caractérisé en ce qu'**il comporte au niveau de la réception au moins les étapes suivantes :
∘ mettre en mémoire les répliques de fragment FRG reçues,
∘ décodage souple d'une réplique fragment FRG,
∘ décoder le CRC de la réplique reçue,
∘ en cas d'erreur, transmettre à l'émetteur un accusé NACK,
∘ sinon transmettre un accusé ACK à l'émetteur et, en parallèle sauvegarder les PDU(i), puis tester si i est égal au nombre N de PDU, (86)
Si oui, réassembler le SDU, (87),
Si non attendre les autres paquets.

## Patentansprüche

1. Weiterübertragungsverfahren mit inkrementeller Redundanz, ausgelegt zum Übertragen von Paketen, die in N Pakete mit Index i fragmentiert werden können, implementiert in einem Übertragungssystem, das wenigstens einen Sender (21) und einen Empfänger (22) umfasst, **dadurch gekennzeichnet, dass** es in Kombination wenigstens die folgenden Schritte beinhaltet:
am Sender:
1. Empfangen eines Pakets SDU, IP an einer MAC-(Medium Access Controll)-Schicht, wobei das Paket von einer oberen SDU-(Services Data Unit)-Schicht kommt,
2. Unterteilen (31, 60) der SDU in N MAC-Pakete, PDU(i) notiert (Netzwerkprotokolleinheiten oder Protocol Data Unit),
3. Initialisieren (32, 62) des Zählers C_MSDU entsprechend dem Weiterübertragungsglobalkredit auf N*M, wobei M die Anzahl von für jede PDU autorisierten Übertragungen/Weiterübertragungen ist,
4. Initialisieren von i auf einen gegebenen Wert mit i = 1, wobei i dem Index der PDU entspricht, die übertragen wird,
5. Codieren (33, 63) eines Pakets PDU(i) mit einem Faltungscodierer mit Ertrag 1/k, wobei K MAC-Pakete erhalten werden, wobei jedes der K MAC-Pakete mit P.MAC(i)(k) notiert ist, wobei k von 1 bis K variiert, wobei ein Paket P.MAC(i)(k) die PDU enthält und (K -1) Pakete die Redundanz c enthalten,
6. Setzen von k=1 (36) und Übertragen der PDU Nr. i, die nach dem Codieren erhalten wird (oder P.MAC(i)(1)),
7. am Sender, Dekrementieren (37, 66) des Weiterübertragungskreditzählers C_MSDU um eine Einheit und Übertragen (38) eines MAC.P.MAC(1) Pakets zum Empfänger,
8. am Empfänger, Übertragen einer Empfangsquittung ACK zum Sender (39) und Verifizieren des Wertes von i, wenn es keinen Fehler gibt:
wenn i=N, dann wurden alle PDU erfolgreich übertragen, Wiederzusammensetzen der SDU,
wenn i<N und wenn C_MSDU größer ist als die Zahl von PDU, die noch nicht wenigstens einmal übertragen wurden, Inkrementieren von i um eine Einheit und Zurückgehen zu Schritt 5 des Unterteilens der SDU in N MAC-Pakete,
wenn i<N und C_MSDU kleiner ist als die Zahl von PDU, die noch nicht übertragen wurden, Feststellen des Misserfolgs des Übertragens der SDU;
9. wenn es Fehler gibt, Senden einer NACK zum Sender und Verifizieren des Wertes der C_MSDU:
• wenn C_MSDU kleiner ist als die Zahl von PDU, die noch nicht übertragen wurden, Feststellen des Misserfolgs der Übertragung der SDU,
• wenn C_MSDU größer ist als die Zahl von PDU, die noch nicht übertragen wurden, und die (K-1) mit PDU Nr. i assoziierten Redundanzblöcke nicht übertragen wurden, dann Inkrementieren von k um eine Einheit und Übertragen des mit P.MAC(i)(k) notierten MAC-Pakets und Zurückkehren zu Schritt 8,
• wenn C_MSDU größer ist als die Anzahl von PDU, die noch nicht übertragen wurden, und alle Blöcke, inkl. Informationen und Redundanz, die nach dem Codieren der PDU Nr. i erhalten wurden, übertragen wurden, Zurückkehren zu Schritt 6, ohne den Wert von i zu modifizieren.

2. Verfahren nach Anspruch 1, **dadurch gekennzeichnet, dass** es beim Empfang wenigstens die folgenden Schritte beinhaltet:
Speichern (49) eines empfangenen Fragments und gleichzeitig Prüfen (50), ob der Index des Fragments, mit k notiert, einem ersten Fragment des übertragenen Pakets entspricht,
• wenn k ungleich 1 ist, Verketten (51) der empfangenen Fragmente von 1 bis k, unter Verwendung der gespeicherten Elemente,
∘ Decodieren mit der beim Senden benutzten Ertragscodierung und Übergehen zu einem Decodierschritt (52),
• wenn k gleich 1 ist, Decodieren (53) der CRC des empfangenen MAC-Pakets P.MAC(i)(k),
nach dem Decodieren erfolgendes Prüfen, ob es in der Übertragung des Fragments einen Fehler gibt, (54),
• wenn es einen Fehler gibt, Übertragen der NACK-Nachricht (55) zum Sender,
• wenn es keinen Fehler gibt, Übertragen der ACK-Nachrichten (56) zum Sender und gleichzeitig Realisieren eines Schutzes von PDU(i) (57), dann Prüfen, ob i gleich der Anzahl N von PDU ist, (58),
• wenn ja, Wiederzusammensetzen der SDU, (59).

3. Verfahren nach Anspruch 1, **dadurch gekennzeichnet, dass** in dem Fall, in dem ein MAC-Paket aus Schritt 2 einmal mit einem Fehlercode in einem FRG-Fragment (65) codiert ist, beinhaltet das Verfahren wenigstens die folgenden Schritte:
am Sender:
• Codieren (63) der PDU(i) im Laufe der Verarbeitung mit einer CRC, die zu einem MAC(i) Paket führt, dann (64) Codieren des MAC(i) Pakets mit einem Fehlerkorrekturcode in ein SRG-Fragment (65),
• Dekrementieren (66) des Weiterübertragungskreditzählers C_MSDU um eine Einheit und Übertragen des SRG-Fragments (65) zum Empfänger,
• (68) der Sender empfängt die Quittung des vom Empfänger kommenden übertragenen Pakets,
• in dem Fall, in dem es keinen Fehler in der Übertragung des MAC-Pakets P.MAC(i)(k) gibt (ACK empfangen vom Empfänger zum Sender), Ausführen der folgenden Schritte:
- Prüfen, ob i=N (70)
wenn ja, (71) Feststellen des Erfolgs der Übertragung,
wenn nein, (72) Berücksichtigen des folgenden MAC-Pakets, i=i+1 und Zurückkehren zum Codierungsschritt (63),
• wenn es Fehler in der Übertragung gegeben hat, dann wurde NACK empfangen,
wenn die Anzahl der noch zu übertragenden Fragmente kleiner ist als der Wert des Zählers C_MSDU (73), Dekrementieren des Zählers C_MSDU (66) und Wiederholen der Übertragung des FRG-Fragments innerhalb der Grenze des Zählers C_MSDU,
andernfalls Stoppen der Übertragung der SDU und Feststellen des Misserfolgs der Übertragung der SDU (74).

4. Verfahren nach Anspruch 3, **dadurch gekennzeichnet, dass** es beim Empfang wenigstens die folgenden Schritte beinhaltet:
∘ Speichern der empfangenen SRG-Fragmentreplikate,
∘ elastisches Decodieren eines SRG-Fragmentreplikats,
∘ Decodieren der CRC des empfangenen Replikats,
∘ im Falle eines Fehlers, Übertragen einer NACK-Quittung zum Sender,
∘ andernfalls Übertragen eine ACK-Quittung zum Sender und, parallel, Schützen der PDU(i), dann Prüfen, ob i gleich der Anzahl N von PDU ist, (86)
wenn ja, Wiederzusammensetzen der SDU (87),
wenn nein, Warten auf die anderen Pakete.

## Claims

1. An incremental redundancy retransmission method adapted to transmissions of packets that can be fragmented into N packets of index i implemented in a transmission system comprising at least one transmitter (21) and one receiver (22), **characterised in that** it comprises, in combination, at least the following steps:
at said receiver:
1. receiving an SDU, IP packet in an MAC (Medium Access Control) layer, said packet coming from an SDU (Services Data Unit) high layer,
2. dividing (31, 60) said SDU into N MAC packets denoted PDU(i) (Protocol Data Units),
3. initializing (32, 62) the counter C_MSDU corresponding to the overall retransmission credit to N*M, where M is the number of transmissions/retransmissions allowed for each PDU,
4. initializing i to a given value, with i = 1, i corresponding to the index of the PDU that will be transmitted,
5. coding (33, 63) a packet PDU(i) with a convolution coder of efficiency 1/K, K MAC packets being obtained, each of the K MAC packets being denoted P.MAC(i)(k) with k varying from 1 to K, one P.MAC(i)(k) packet containing the PDU and (K-1) packets containing the redundancy, c,
6. setting k=1 (36) and transmitting the PDU n°i obtained after coding (i.e. P.MAC(i)(1)),
7. at the transmitter, decrementing (37, 66) the retransmission credit counter, C_MSDU by one unit, and transmitting (38) an MAC.P.MAC(1) packet to the receiver,
8. at the receiver, transmitting an acknowledgement ACK to the transmitter (39) and checking the value of i, if there is no error:
if i=N, then all of the PDUs have been transmitted successfully, reassembling the SDU,
if i<N and if C_MSDU is greater than the number of PDUs that have not yet been transmitted at least once, incrementing i by one unit and returning to the step 5 of dividing the SDU into N MAC packets,
if i<N and C_MSDU is less than the number of PDUs that have not yet been transmitted, then decreeing that the transmission of the SDU has failed,
9. if there are errors, sending a NACK to the transmitter and checking the value of C_MSDU:
• if C_MSDU is less than the number of PDUs that have not yet been transmitted, then decreeing that the transmission of the SDU has failed,
• if C_MSDU is greater than the number of PDUs that have not yet been transmitted and only the (K-1) redundancy blocks associated with the PDU n°i have not been transmitted, then incrementing k by one unit and transmitting the MAC packet denoted P.MAC(i)(k) and returning to the step 8,
• if C_MSDU is greater than the number of PDUs that have not yet been transmitted and all the blocks, information and redundancy included, obtained after coding the PDU n°i have been transmitted, then returning to the step 6 without modifying the value of i.

2. The method according to claim 1, **characterised in that** it comprises, in reception, at least the following steps:
storing (49) a received fragment and simultaneously testing (50) whether the index of the fragment, denoted k, corresponds to the first fragment of the transmitted packet,
▪ if k is different from 1, concatenating (51) the received fragments from 1 to k by using the stored elements,
∘ decoding with the coding of efficiency used in transmission and going to a decoding step (52),
▪ if k is equal to 1, decoding (53) the CRC of the MAC packet P.MAC(i)(k) received,
after decoding, testing whether there is an error in the transmission of the fragment (54)
▪ if there is an error, transmitting the NACK message, (55), to the transmitter,
▪ if there is no error, transmitting the ACK message, (56), to the transmitter and simultaneously forming a backup of the PDU(i), (57), then testing whether i is equal to the number N of PDUs, (58),
∘ if it is, reassembling the SDU, (59).

3. The method according to claim 1, **characterised in that** in the case where a MAC packet from step 2 is coded once with an error code into a fragment FRG (65), said method comprises at least the following steps:
at the transmitter:
• coding (63) the PDU(i) being processed with a CRC leading to a packet MAC(i), then (64) coding the MAC(i) packet with an error correction code into a fragment FRG (65),
• decrementing (66) the retransmission credit counter, C_MSDU of one unit and transmitting the fragment FRG (65) to the receiver,
• (68) the transmitter receives the acknowledgement of the transmitted packet coming from the receiver,
• in the case where there is no error in the transmission of the MAC packet P.MAC (i)(k), (ACK received from the receiver to the sender), the following steps are executed:
- testing whether i=N, (70),
if it does, (71) decree that the transmission has been successful,
otherwise (72), consider the following MAC packet, i+i+1 and return to the coding step (63),
• if there have been errors in the transmission, the NACK has been received,
if the number of fragments remaining to be transmitted is lower than the value of the counter C-MSDU, (73), the counter C_MSDU is decremented, (66), and the transmission of the fragment FRG is reiterated within the limit of the counter C_MSDU,
otherwise, stop the transmission of the SDU and decree that the transmission of the SDU has failed, (74).

4. The method according to claim 3, **characterised in that** it comprises, in reception, at least the following steps:
∘ committing the received fragment FRG replicas to memory,
∘ flexibly decoding a fragment FRG replica,
∘ decoding the CRC of the received replica,
∘ in case of an error, transmitting a NACK acknowledgement to the transmitter,
∘ otherwise, transmitting an ACK acknowledgement to the transmitter and, in parallel, backing up the PDUs(i), then testing whether i is equal to the number N of PDUs, (86),
if it is, reassembling the SDU, (87),
if it is not, awaiting the other packets.
